# EUROPÄISCHE PATENTANMELDUNG

(11) **EP 2 371 516 A1**
(43) Veröffentlichungstag der Anmeldung: **05.10.2011**
(21) Anmeldenummer: 11001930.4
(22) Anmeldetag: 09.03.2011
(51) Int. Cl.: B29C 45/27

(54) **Heisskanaldüse und Düsenspitze für eine Heisskanaldüse**

(30) Priorität: 01.04.2010 DE 102010013859
(71) Anmelder: Günther Heisskanaltechnik GmbH, 35066 Frankenberg/Eder (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Buchhold, Jürgen

(57) **Zusammenfassung**

Die Erfindung betrifft eine Heißkanaldüse (10) für ein Spritzgießwerkzeug, mit einem Materialrohr (20), in welchem ein Strömungskanal (21) für eine schmelzfähige Masse ausgebildet ist, wobei der Strömungskanal (21) einen oberen Abschnitt (22) und einen unteren Abschnitt (23) aufweist, und mit einer Düsenspitze (30), die in den unteren Abschnitt (23) des Strömungskanals (21) einsetzbar ist, wobei in der Düsenspitze (30) wenigstens ein Düsenspitzenkanal (31) ausgebildet ist, der den obere Abschnitt (22) des Strömungskanals (21) in der Düsenspitze (20) fortsetzt. Dabei ist an der Düsenspitze (30) ein Dichtvorsprung (40) ausgebildet, der den unteren Abschnitt (23) des Strömungskanals (21) verschließt.

## Beschreibung

Die Erfindung betrifft eine Heißkanaldüse gemäß dem Oberbegriff von Anspruch 1, sowie eine Düsenspitze für eine Heißkanaldüse gemäß Anspruch 7 und die Verwendung einer Heißkanaldüse sowie einer Düsenspitze gemäß den Ansprüchen 9 und 10.

Heißkanaldüsen für Spritzgießwerkzeuge sind allgemein bekannt, beispielweise aus DE-U1-295 01 450 oder DE-U1-201 00 840. Die darin offenbarten Heißkanaldüsen haben jeweils ein außenbeheiztes Materialrohr mit einem Schmelzekanal, um eine fließfähige Kunststoffmasse bei einer vorgegebenen Temperatur unter relativ hohem Druck einem trennbaren Werkzeugblock (Formnest) zuzuführen. Ein Ende des Materialrohres ist gewöhnlich mit einem ebenfalls beheizten Verteiler verbunden, während das andere freie Ende im Bereich einer sogenannten Vorkammer gegenüber einer Angussöffnung positioniert ist. Damit sich Kunststoffmasse innerhalb der Vorkammer nicht vorzeitig abkühlt, ist in das freie Ende des Materialrohres eine Düsenspitze aus wärmeleitfähigem Material eingesetzt, die mit einer konischen Spitze bis an die Angussöffnung heran reicht.

Ein Problem solcher herkömmlicher Heißkanaldüsen besteht darin, dass sie nicht für alle thermoplastischen Kunststoffe gleichermaßen geeignet sind. So gibt es eine Reihe von Kunststoffen, die im erhitzten flüssigen Zustand besonders kriechfähig sind. Diese Kunststoffe können bei einer Heißkanaldüse, bei der die Düsenspitze - wie in den oben genannten Beispielen gezeigt - in das untere Ende des Materialrohres eingesetzt ist, von der Vorkammer aus in den schmalen Spalt zwischen Düsenspitze und Materialrohr hinein kriechen, selbst wenn die Düsenspitze in das Materialrohr mittels Gewinde eingeschraubt ist. In dem Spalt verbrennt das Kunststoffmaterial jedoch gewöhnlich, fließt anschließend zurück in die Vorkammer und vermischt sich dort mit dem nicht verbrannten Kunststoff aus dem Materialrohr, so dass im Produkt unerwünschte Schlieren entstehen. Dadurch kommt es zu einer hohen Anzahl von Ausschuss-Stücken unter den herzustellenden Spritzgussprodukten, was sich nicht nur ungünstig auf die Herstellkosten auswirkt. Auch Materialverbrauch und Werkzeugkosten sind unerwünscht hoch.

Ziel der Erfindung ist es, diese und weitere Nachteile des Standes der Technik zu vermeiden und eine verbesserte Heißkanaldüse, sowie eine verbesserte Düsenspitze für eine Heißkanaldüse zur Verfügung zustellen. Die Heißkanaldüse und die Düsenspitze sollen mit einfachen Mitteln kostengünstig und wartungsfreundlich herstellbar sein. Insbesondere soll das Einkriechen der Schmelze in den Spalt zwischen Materialrohr und Düsenspitze wirksam verhindert werden.

Hauptmerkmale der Erfindung sind im kennzeichnenden Teil von Anspruch 1, sowie in den nebengeordneten Ansprüchen 7, 9 und 10 angegeben. Ausgestaltungen sind Gegenstand der Ansprüche 2 bis 6 und 8.

Bei einer Heißkanaldüse für ein Spritzgießwerkzeug, mit einem Materialrohr, in welchem ein Strömungskanal für eine schmelzfähige Masse ausgebildet ist, wobei der Strömungskanal einen oberen Abschnitt und einen unteren Abschnitt aufweist, und mit einer Düsenspitze, die in den unteren Abschnitt des Strömungskanals einsetzbar ist, wobei in der Düsenspitze wenigstens ein Düsenspitzenkanal ausgebildet ist, der den obere Abschnitt des Strömungskanals in der Düsenspitze fortsetzt, sieht die Erfindung vor, dass an der Düsenspitze ein Dichtvorsprung ausgebildet ist, der den unteren Abschnitt des Strömungskanals verschließt.

Der Dichtvorsprung verhindert wirksam, dass geschmolzenes Kunststoffmaterial, welches aus der Düsenspitze austritt und in den Raum zwischen Düsenspitze, Materialrohr und Anguss gelangt, zurück in den Spalt zwischen der Düsenspitze und dem Materialrohr, oder sogar in den Gewindespalt - falls die Düsenspitze in das Materialrohr eingeschraubt ist - kriechen kann.

Die Schmelze strömt in einer solchen erfindungsgemäßen Heißkanaldüse unter Druck vom oberen Abschnitt des Strömungskanals in den Düsenspitzenkanal und verlässt die Düsenspitze durch einen oder mehrere Austrittskanäle. Diese Austrittskanäle münden beispielsweise in einen Hohlraum, der von dem Materialrohr, der Düsenspitze und dem Werkzeug begrenzt wird. Von diesem Hohlraum aus gelangt die Schmelze durch einen Anguss in das Formnest. Der Spalt zwischen dem Materialrohr, nämlich der Innenwand des unteren Abschnittes des Strömungskanals, und der Düsenspitze wird dabei erfindungsgemäß durch den Dichtvorsprung verschlossen. Bevorzugt handelt es sich bei dem Dichtvorsprung beispielsweise um einen umlaufenden Dichtflansch oder eine umlaufende Dichtlippe, der bzw. die am äußeren Umfang der Düsenspitze oberhalb der Austrittskanäle ausgebildet ist.

Dabei ist es von Vorteil, wenn im unteren Abschnitt des Strömungskanals ein Anschlag für den Dichtvorsprung ausgebildet ist. Der Dichtvorsprung kann dann - nach dem Einsetzen oder Einschrauben der Düsenspitze in das Materialrohr - dicht an dem Anschlag anliegen. Auf diese Weise wird die Dichtwirkung deutlich verstärkt.

Günstig ist es auch, wenn der Dichtvorsprung plastisch verformbar ist. Die Düsenspitze kann dann bis zu einem Anschlag, der beispielsweise am Übergang des oberen Abschnittes des Strömungskanals zum unteren Abschnitt des Strömungskanals ausgebildet ist, in das Materialrohr eingeschoben oder eingeschraubt werden. Der Dichtvorsprung kommt dabei mit dem an dem zuvor genannten, im unteren Abschnitt ausgebildeten Anschlag in Kontakt und gibt dessen Form derart nach, dass der Spalt zwischen Materialrohr und Düsenspitze wirksam verschlossen ist. Vorstellbar ist auch, dass der Dichtvorsprung durch den Druck, der in dem von Düsenspitze, Materialrohr und Werkzeug begrenzten Hohlraum herrscht, gegen den im unteren Abschnitt des Strömungskanals ausgebildeten Anschlag gepresst wird. Auch in diesem Fall wird die Dichtwirkung begünstigt, wenn der Dichtvorsprung plastisch verformbar ist und dem Druck zumindest in engen Grenzen nachgeben kann.

Man erkennt, dass es ein weiterer Vorteil der Erfindung ist, wenn zwischen dem oberen Abschnitt des Strömungskanals und dem unteren Abschnitt des Strömungskanals ein Absatz ausgebildet ist, der einen Anschlag für den Halsabschnitt der Düsenspitze bildet. Die Düsenspitze kann dann - wie oben dargestellt - bis zum Anschlag in das Materialrohr eingeschoben oder eingeschraubt werden.

Liegt die Düsenspitze dicht an diesem Anschlag an, so wird auch im Übergangsbereich zwischen dem oberen Abschnitt des Strömungskanals und dem Düsenspitzenkanal verhindert, dass Kunststoffmaterial in den Spalt zwischen der Düsenspitze und dem Materialrohr eindringen kann. Dabei ist es zusätzlich von Vorteil, wenn die Düsenspitze einen Halsabschnitt aufweist, der im Betriebszustand der Heißkanaldüse formschlüssig im unteren Abschnitt des Strömungskanals anliegt.

In einer bevorzugten Ausführungsvariante weist die Düsenspitze an ihrem dem Materialrohr zugewandten Ende einen umlaufenden konischen Ring auf. Dieser Ring ist insbesondere dann vorteilhaft, wenn er derart auf dem Halsabschnitt der Düsenspitze ausgebildet ist, dass er sich beim Einsetzen der Düsenspitze in das Materialrohr im Bereich des oben beschriebenen Anschlages in das Material des Materialrohres einfressen kann. Er wirkt dann wie ein Schneidring und verbessert auf diese Weise die Dichtigkeit zwischen der Düsenspitze und dem Materialrohr.

Man erkennt, dass es ein weiterer Vorteil der Erfindung ist, dass die Düsenspitze mit dem unteren Abschnitt des Strömungskanals lösbar verbindbar sein kann. Die Düsenspitze kann auf diese Weise bei Bedarf ausgewechselt werden.

In einer weiteren Ausführungsvariante, ist vorstellbar, dass der Dichtvorsprung unter Presspassung an der Innenwand des Materialrohres anliegt. Der Dichtvorsprung kann dann besonders massiv ausgebildet sein und gewährleistet dennoch stets zuverlässig einen dichten Abschluss zwischen Düsenspitze und Materialrohr.

Die Erfindung sieht außerdem bei einer Düsenspitze für eine erfindungsgemäße Heißkanaldüse vor, dass an der Düsenspitze ein Dichtvorsprung ausgebildet ist. Dabei ist es von großem Vorteil, wenn der Dichtvorsprung plastisch verformbar ist. Zudem ist es auch hier günstig, wenn die Düsenspitze wie bereits oben beschrieben einen konusförmigen umlaufenden Ring aufweist, der nach Art eines Schneidringes die Dichtigkeit zwischen der Düsenspitze und einem Materialrohr verbessert, in welches die Düsenspitze eingesetzt werden kann. Man erkennt, dass es vorteilhaft ist, wenn die Düsenspitze an ihrem dem Materialrohr zugewandten Ende einen umlaufenden konischen Ring aufweist.

Weiterhin ist die Verwendung einer erfindungsgemäßen Heißkanaldüse zur Verarbeitung von thermoplastischen Kunststoffen, bevorzugt zur Verarbeitung von Kunststoffen aus der Gruppe der Polycarbonate und/oder aus der Gruppe der Polyoxymethylen-Verbindungen, und die Verwendung einer erfindungsgemäßen Düsenspitze zur Verarbeitung von thermoplastischen Kunststoffen, bevorzugt zur Verarbeitung von Kunststoffen aus der Gruppe der Polycarbonate und/oder aus der Gruppe der Polyoxymethylen-Verbindungen, Gegenstand der Erfindung.

Insbesondere bei der Verarbeitung der zuvor genannten Kunststoffe verhindert der Dichtvorsprung der erfindungsgemäßen Heißkanaldüse bzw. der erfindungsgemäßen Düsenspitze wirksam, dass Material in den Spalt zwischen Düsenspitze und Materialrohr gelangt. Es ist daher nicht notwendig den Spalt auf andere Weise - beispielsweise durch Einlöten der Düsenspitze - zu versiegeln. Die Düsenspitze kann stattdessen einfach in den untern Abschnitt des Strömungskanals eingeschraubt und mithin bei Bedarf ausgetauscht werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 Eine erfindungsgemäße Heißkanaldüse mit einer erfindungsgemäßen Düsenspitze
Fig. 2 eine Ausschnittsvergrößerung aus Fig. 1 im Bereich des Dichtvorsprunges der Düsenspitze
Fig. 3 eine alternative Ausführungsform einer erfindungsgemäßen Düsenspitze
Fig. 4 eine Ausschnittsvergrößerung des mit X markierten Bereiches aus Fig. 3
Fig. 5 eine Ausschnittsvergrößerung des mit Y markierten Bereiches aus Fig. 3.

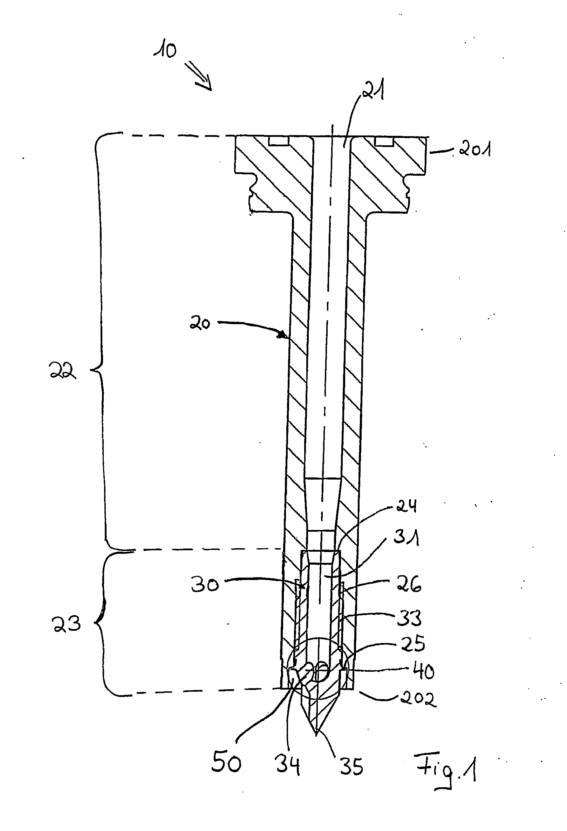

Eine erfindungsgemäße Heißkanaldüse 10, wie sie in Fig. 1 dargestellt ist, hat ein Materialrohr 20, mit einem Kopf 201 und einem unteren Ende 202. In dem Materialrohr 20 ist ein Strömungskanal 21 ausgebildet, der einen am Kopf 201 des Materialrohres 20 beginnenden oberen Abschnitt 22 und einen am unteren Ende 202 des Materialrohres 20 endenden unteren Abschnitt 23 aufweist.

Der unteren Abschnitt 23 des Strömungskanals 21 dient zur Aufnahme eine Düsenspitze 30. Die Düsenspitze 30 hat einen Halsabschnitt 32 und eine Spitze 35. Der Halsabschnitt 32 kann wie im gezeigten Ausführungsbeispiel mit einem Gewinde 33 ausgestattet sein, welches in ein entsprechendes Gewinde 26 eingreifen kann, das im Materialrohr 20 im unteren Abschnitt 23 des Strömungskanals 21 ausgebildet ist.

Zwischen dem oberen Abschnitt 22 des Strömungskanals 21 und dem unteren Abschnitt 23 des Strömungskanals 21 ist ein Absatz 24 ausgebildet. Dieser Absatz 24 stellt einen Anschlag für den Halsabschnitt 32 der Düsenspitze 30 dar, wenn diese vollständig in den Strömungskanal 21 bzw. das im Materialrohr 20 ausgebildete Gewinde 26 eingeschraubt ist. Liegt der Halsabschnitt 32 an diesem Absatz 24 an und ist die Betriebstemperatur der Heißkanaldüse erreicht, so geht der obere Abschnitt 22 des Strömungskanals 21 lückenlose in einen in der Düsenspitze 30 ausgebildeten Düsenspitzenkanal 31 über. Dabei können sowohl der obere Abschnitt 22 des Strömungskanals 21 als auch der an diesen Abschnitt angrenzende Bereich des Düsenspitzenkanals 31 wie im dargestellten Ausführungsbeispiel konisch zulaufen.

Der Düsenspitzenkanal 31 mündet in einer Anzahl von Austrittskanälen 34. Diese wiederum münden in einen Hohlraum 50, der von dem Materialrohr 20, der Düsenspitze 30 und dem (nicht dargestellten) Werkzeug begrenzt wird.

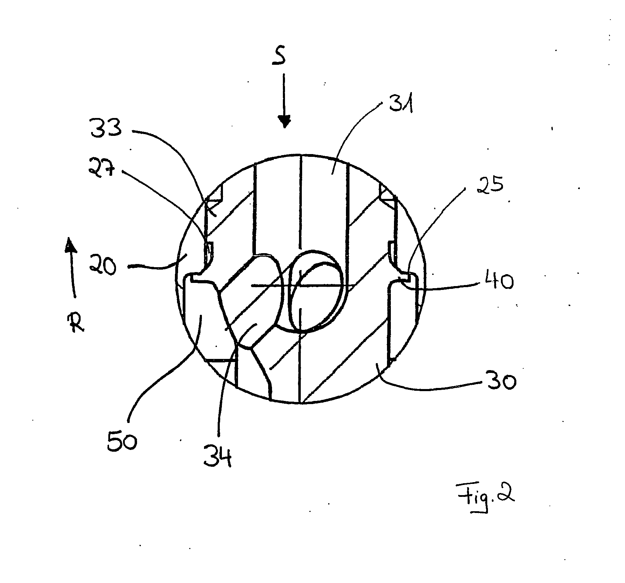

Zwischen der Mündung der Austrittskanäle 34 und dem am Halsabschnitt 32 ausgebildeten Gewinde 33 der Düsenspitze 30 ist der erfindungsgemäße Dichtvorsprung 40 ausgebildet. Dabei handelt es sich in den in Fig. 1 und Fig. 2 dargestellten Ausführungsbeispielen um einen plastisch verformbaren Vorsprung, der sich radial umlaufend an der Außenseite der Düsenspitze 30 befindet.

Man erkennt in Fig. 1 und insbesondere in der Ausschnittsvergrößerung von Fig. 2, dass der Dichtvorsprung 40 an einen Anschlag an einem Absatz 25 findet. Dabei versperrt der Dichtvorsprung 40 in Richtung R den Eintritt von Kunststoffmaterial aus dem Hohlraum 50 in den Gewindespalt 27, der zwischen dem Gewinde 33 der Düsenspitze 30 und dem Gewinde 26 des Materialrohres 20 ausgebildet ist.

Die Kunststoffschmelze gelangt vielmehr unter Druck ausschließlich in Richtung S vom oberen Abschnitt 22 des Strömungskanals 21 in den Düsenspitzenkanal 31, durch die Austrittskanäle 34 in den Hohlraum 50 und von dort durch eine (nicht dargestellten) Angussöffnung in eine (ebenfalls nicht dargestellte) zu füllende Formkavität des Werkzeuges. Insgesamt bildet der untere Abschnitt 23 des Strömungskanals 21 auf diese Weise eine Dichtglocke, die die Düsenspitze 30 übergreift und mittels des an der Düsenspitze 30 ausgebildeten Dichtvorsprunges 40 gegenüber dem oberen Teil des Strömungskanals 21 wirksam verschlossen wird.

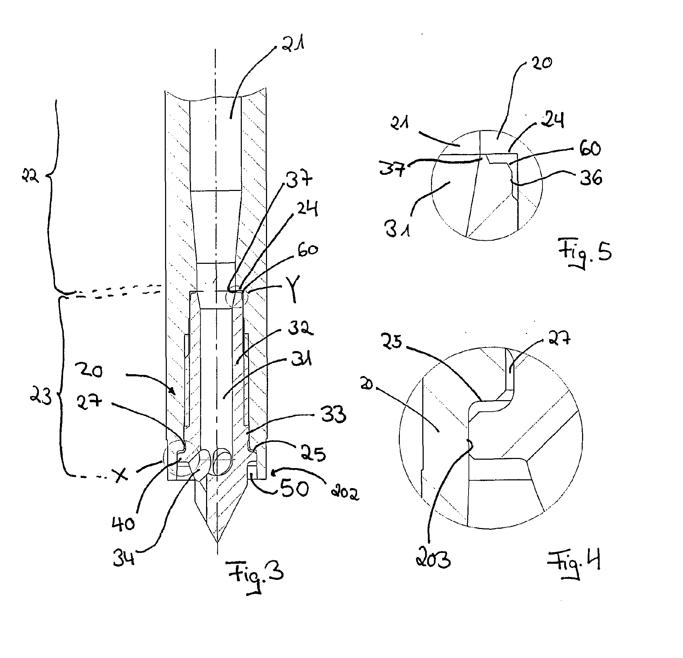

Die in den Figuren 3, 4 und 6 dargestellte alternative Düsenspitze 30 hat ebenfalls einen Dichtvorsprung 40. Diese liegt unter Presspassung an der Innenwand 203 des unteren Abschnittes 23 des Strömungskanals 21 und mithin am Materialrohr 20 an. Man erkennt insbesondere in der Ausschnittsvergrößerung in Fig. 4, die den mit X markierten Bereich der Fig. 3 darstellt, dass auch bei dieser Ausführungsform der Gewindespalt 27 zwischen der Düsenspitze 30 und dem Materialrohr 20 zuverlässig abgedichtet wird.

Die in Fig. 3 dargestellte Düsenspitze 30 weist zudem am oberen Ende des Halsabschnittes 32 einen rückspringenden umlaufenden Rand 36 auf. Man erkennt insbesondere in der Ausschnittsvergrößerung in Fig. 5, die den - in Fig. 3 mit Y markierten - Bereich darstellt, dass auf diesen Rand 36 ein umlaufender, in seinem Querschnitt konisch geformter Ring 37 ausgebildet ist. Beim Einsetzen der Düsenspitze 30 in das Materialrohr 20 kommt dieser Ring 37 am Absatz 24 des Materialrohres 20 zum Anschlag und wird nach Art eines Schneidringes gegen das Material des Absatzes 24 gepresst. Dabei ist sogar vorstellbar, dass der Ring 37 bei besonders starkem Druck in das Material des Materialrohres 20 einschneiden kann. Insgesamt wird auf diese Weise ein besonders dichter Abschluss zwischen dem Halsabschnitt 32 der Düsenspitze 30 und dem Materialrohr 20 erreicht. Auf diese Weise kann auch im oberen Bereich der Düsenspitze 30 kein Material in den Spalt 60, der zwischen Düsenspitze 30 und Materialrohr 20 ausgebildet ist eindringen. Dabei wird der im oberen Bereich ausgebildete Spalt 60 unmittelbar durch den Gewindespalt 27 fortgesetzt.

Die Erfindung ist nicht auf eine der vorbeschriebenen Ausführungsformen beschränkt, sondern in vielfältiger Weise abwandelbar. So ist beispielsweise vorstellbar, dass der Halsabschnitt 32 der Düsenspitze 30 einfach in den unteren Abschnitt 23 des Strömungskanals 21 einschiebbar ist.

Selbstverständlich kann auch die in den Figuren 1 und 2 dargestellte Ausführungsvariante der Düsenspitze 30 im Bereich des Halsabschnittes 32 mit einem nach Art eines Schneidringes wirkenden Ringes 37 versehen sein. Dabei kann der Ring 37 in allen Ausführungsvarianten auch unabhängig vom Rand 36 direkt am Halsabschnitt 32 der Düsenspitze 30 ausgebildet sein.

Man erkennt, dass es bei einer Heißkanaldüse 10 für ein Spritzgießwerkzeug, mit einem Materialrohr 20, in welchem ein Strömungskanal 21 für eine schmelzfähige Masse ausgebildet ist, wobei der Strömungskanal 21 einen oberen Abschnitt 22 und einen unteren Abschnitt 23 aufweist, und mit einer Düsenspitze 30, die in den unteren Abschnitt 23 des Strömungskanals 21 einsetzbar ist, wobei in der Düsenspitze 30 wenigstens ein Düsenspitzenkanal 31 ausgebildet ist, der den obere Abschnitt 22 des Strömungskanals 21 in der Düsenspitze 20 fortsetzt, von besonderem Vorteil ist, wenn an der Düsenspitze 30 ein Dichtvorsprung 40 ausgebildet ist, der den unteren Abschnitt 23 des Strömungskanals 21 verschließt. Dabei ist es zweckmäßig, wenn im unteren Abschnitt 23 des Strömungskanals 21 ein Anschlag 25 für den Dichtvorsprung 40 ausgebildet ist und wenn der Dichtvorsprung 40 plastisch verformbar ist.

Vorteilhaft ist es auch, wenn die Düsenspitze 30 mit dem unteren Abschnitt 23 des Strömungskanals 21 lösbar verbindbar ist und wenn die Düsenspitze 30 einen Halsabschnitt 32 aufweist, der im Betriebszustand der Heißkanaldüse 10 formschlüssig im unteren Abschnitt 23 des Strömungskanals 21 anliegt. Bevorzugt ist außerdem zwischen dem oberen Abschnitt 22 des Strömungskanals 21 und dem unteren Abschnitt 23 des Strömungskanals 21 ein Absatz 24 ausgebildet ist, der einen Anschlag für den Halsabschnitt 32 der Düsenspitze 30 bildet. Bevorzugt, weist die Düsenspitze an ihrem dem Materialrohr 20 zugewandten Ende einen umlaufenden konischen Ring 37 auf. Außerdem ist es günstig, wenn der Dichtvorsprung 40 unter Presspassung an der Innenwand 203 des Materialrohres anliegt.

Man erkennt weiter, dass es bei einer Düsenspitze 30 für eine erfindungsgemäße Heißkanaldüse 10 vorteilhaft ist, wenn an der Düsenspitze 30 ein Dichtvorsprung 40 ausgebildet ist und wenn der Dichtvorsprung 40 plastisch verformbar ist. Auch hier ist es günstig, wenn die Düsenspitze an ihrem dem Materialrohr 20 zugewandten Ende einen umlaufenden konischen Ring 37 aufweist. Außerdem erkennt man den Vorteil der Verwendung einer erfindungsgemäßen Heißkanaldüse 10 bei der Verarbeitung von thermoplastischen Kunststoffen, bevorzugt zur Verarbeitung von Kunststoffen aus der Gruppe der Polycarbonate und/oder aus der Gruppe der Polyoxymethylen-Verbindungen sowie den Vorteil der Verwendung einer erfindungsgemäßen Düsenspitze 30 bei der Verarbeitung von thermoplastischen Kunststoffen, bevorzugt zur Verarbeitung von Kunststoffen aus der Gruppe der Polycarbonate und/oder aus der Gruppe der Polyoxymethylen-Verbindungen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- R: Richtung
- S: Richtung

- 10: Heißkanaldüse

- 20: Materialrohr
- 201: Kopf
- 202: Unteres Ende
- 203: Innenwand
- 21: Strömungskanal
- 22: Oberer Abschnitt
- 23: Unterer Abschnitt
- 24: Absatz
- 25: Absatz
- 26: Gewinde
- 27: Gewindespalt
- 30: Düsenspitze
- 31: Düsenspitzenkanal
- 32: Halsabschnitt
- 33: Gewinde
- 34: Austrittskanal
- 35: Spitze
- 36: Rand
- 37: Ring

- 40: Dichtvorsprung

- 50: Hohlraum

- 60: Spalt

## Patentansprüche

1. Heißkanaldüse (10) für ein Spritzgießwerkzeug, mit einem Materialrohr (20), in dem ein Strömungskanal (21) für eine fließfähige Masse ausgebildet ist, wobei der Strömungskanal (21) einen ersten Abschnitt (22) und einen zweiten Abschnitt (23) aufweist, und mit einer Düsenspitze (30), die in den zweiten Abschnitt (23) des Strömungskanals (21) einsetzbar ist, wobei in der Düsenspitze (30) wenigstens ein Düsenspitzenkanal (31) ausgebildet ist, der den ersten Abschnitt (22) des Strömungskanals (21) in der Düsenspitze (20) fortsetzt, **dadurch gekennzeichnet, dass** an der Düsenspitze (30) ein Dichtvorsprung (40) ausgebildet ist, der den unteren Abschnitt (23) des Strömungskanals (21) verschließt.

2. Heißkanaldüse nach Anspruch 1, **dadurch gekennzeichnet, dass** im unteren Abschnitt (23) des Strömungskanals (21) ein Anschlag (25) für den Dichtvorsprung (40) ausgebildet ist.

3. Heißkanaldüse nach wenigstens einem der Ansprüche 1 oder 2, **dadurch gekennzeichnet, dass** der Dichtvorsprung (40) plastisch verformbar ist.

4. Heißkanaldüse nach wenigstens einem der Ansprüche 1 bis 3, **dadurch gekennzeichnet, dass** die Düsenspitze (30) mit dem unteren Abschnitt (23) des Strömungskanals (21) lösbar verbunden ist.

5. Heißkanaldüse nach wenigstens einem der Ansprüche 1 bis 4, **dadurch gekennzeichnet, dass** die Düsenspitze (30) einen Halsabschnitt (32) aufweist, der im Betriebszustand der Heißkanaldüse (10) formschlüssig im unteren Abschnitt (23) des Strömungskanals (21) anliegt.

6. Heißkanaldüse nach wenigstens einem der Ansprüche 1 bis 6, **dadurch gekennzeichnet, dass** zwischen dem oberen Abschnitt (22) des Strömungskanals (21) und dem unteren Abschnitt (23) des Strömungskanals (21) ein Absatz (24) ausgebildet ist, der einen Anschlag für den Halsabschnitt (32) der Düsenspitze (30) bildet.

7. Heißkanaldüse nach einem der vorangegangenen Ansprüche, **dadurch gekennzeichnet, dass** die Düsenspitze an ihrem dem Materialrohr (20) zugewandten Ende einen umlaufenden konischen Ring (37) aufweist.

8. Heißkanaldüse nach einem der vorangegangenen Ansprüche, **dadurch gekennzeichnet, dass** der Dichtvorsprung (40) unter Presspassung an der Innenwand (203) des Materialrohres anliegt.

9. Düsenspitze (30) für eine Heißkanaldüse (10), entsprechend wenigstens einem der Ansprüche 1 bis 6, **dadurch gekennzeichnet, dass** an der Düsenspitze (30) ein Dichtvorsprung (40) ausgebildet ist.

10. Düsenspitze (30) nach Anspruch 7, **dadurch gekennzeichnet, dass** der Dichtvorsprung (40) plastisch verformbar ist.

11. Düsenspitze nach einem der vorangegangenen Ansprüche, **dadurch gekennzeichnet, dass** die Düsenspitze an ihrem dem Materialrohr (20) zugewandten Ende einen umlaufenden konischen Ring (37) aufweist.

12. Verwendung einer Heißkanaldüse (10) entsprechend einem der Ansprüche 1 bis 8 zur Verarbeitung von thermoplastischen Kunststoffen, bevorzugt zur Verarbeitung von Kunststoffen aus der Gruppe der Polycarbonate und/oder aus der Gruppe der Polyoxymethylen-Verbindungen.

13. Verwendung einer Düsenspitze (30) entsprechend einem der Ansprüche 10 oder 11 zur Verarbeitung von thermoplastischen Kunststoffen, bevorzugt zur Verarbeitung von Kunststoffen aus der Gruppe der Polycarbonate und/oder aus der Gruppe der Polyoxymethylen-Verbindungen.
